(19) Europäisches Patentamt
European Patent Office
Office européen des brevets

(11) **EP 3 569 902 B1**

(12) **EUROPEAN PATENT SPECIFICATION**

(45) Date of publication and mention
of the grant of the patent:
**26.08.2020   Bulletin 2020/35**

(51) Int Cl.:
***F16K 5/06*** (2006.01)

(21) Application number: **18206501.1**

(22) Date of filing: **15.11.2018**

(54) **FLOW CHANNEL WITH AN ARCUATE SEGMENT**

STRÖMUNGSKANAL MIT BOGENFÖRMIGEM SEGMENT

CANAL D'ÉCOULEMENT COMPORTANT UN SEGMENT ARQUÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.05.2018 EP 18172818**

(43) Date of publication of application:
**20.11.2019   Bulletin 2019/47**

(73) Proprietor: **Siemens Schweiz AG
8047 Zürich (CH)**

(72) Inventors:
• **Kunzmann, Rolf
76593 Gernsbach (DE)**
• **Wetzel, Martin
76437 Rastatt (DE)**

(74) Representative: **Maier, Daniel Oliver
Siemens AG
Postfach 22 16 34
80506 München (DE)**

(56) References cited:
EP-A1- 2 708 783          WO-A1-99/48739
WO-A1-2012/118452    AT-B- 135 588
GB-A- 2 002 495          KR-B1- 101 387 204
US-A- 3 697 043          US-A- 4 027 698
US-A- 5 205 533          US-A- 5 941 266

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Background

The present disclosure relates to a valve and to flow profiles inside the valve. More specifically, the present disclosure focuses on a valve member of a ball valve. The valve member is optimized to exhibit minimum flow resistance.

Fluid circuits such as circuits for heating, ventilation and/or air-conditioning frequently make use of ball valves. In these valves, a pivoting ball is arranged in between an inlet port and an outlet port. The ball can be selectively pivoted to connect a fluid channel perforating the ball to the inlet and also to the outlet. The valve then is in its open position and enables fluid flow from the inlet to the outlet. The ball can also be selectively pivoted to disconnect the fluid channel from at least one of the inlet or the outlet. The valve is then in its closed position and the fluid path between the inlet and the outlet is obturated.

The fluid channel perforating the valve member commonly comprises at least two leg portions. A first leg portion may connect to the inlet and a second leg portion may connect to the outlet. The leg portions are typically positioned perpendicular to each other. If a fluid flows through the flow channel, the flow direction of the fluid will change abruptly at the junction between the two leg portions. That abrupt change in direction may impair flow resistance. That is, a pump pushing a fluid through the channel needs to overcome the additional flow resistance due to the change in direction at the junction.

Flow sensors such as mass flow sensors or volume flow sensors may be arranged in the flow channel through the valve member. These sensors generally record a measure that relates to fluid flow. In order for such sensors to yield accurate measurements, any adverse influence due to turbulence needs be minimized. An abrupt change in direction may actually result in turbulent flow. It follows that abrupt changes in flow direction should be avoided in order for flow sensors to deliver accurate readings.

The Chinese utility model CN205689801U was filed on 21 June 2016 and issued on 16 November 2016. CN205689801U discloses a valve member 2 with a curved flow channel 9. The valve member 2 is pivotal about an axis defined by a valve stem 3. It sits inside a housing 1 and is disposed inside a fluid path 10. The fluid path 10 can be selectively opened by pivoting member 2 in its open position. The fluid path can also be selectively closed by pivoting the valve member 2 in its closed position.

The flow channel 9 perforating valve member 2 has an arcuate profile thereby avoiding an abrupt change in direction. The flow channel 9 has a profile along a plane defined by the fluid paths 9, 10. That profile provides a wall segment on the outside of the bent. This wall segment points in the direction of the valve stem 3. The profile also provides a wall segment on the inside of the bent.

The latter wall segment points away from the valve stem 3. The valve member comprises both the wall segment on the inside of the bent and the wall segment on the outside of the bent.

A European patent application EP2708783A1 was filed on 24 June 2013. The patent application was published on 19 March 2014. EP2708783A1 discloses a valve according to the preamble of independent claim 1 and teaches a valve for opening and closing a conduit through a wall of a submarine. The valve of EP2708783A1 comprises a fluid flow portion 46 with an arcuate segment 48. The fluid flow portion 46 is pivotal about an axis X. The fluid flow portion 46 is formed as a recess in a solid portion 40.

A pivotal movement of valve stem 3 induces the same pivotal movement of valve member 2. If the valve 1 is initially in its open position and valve stem 3 is pivoted by 180°, the valve 1 may again end up in an open position. That is, the flow channel 9 exhibits rotational symmetry under 180° pivotal movements of the valve stem 3.

The instant disclosure improves on valve members of ball valves. Valves according to the instant disclosure mitigate the aforementioned shortcomings of flow paths with two perpendicular legs.

Summary

The present disclosure aims at providing a valve member for a ball valve that inhibits turbulence. To that end, abrupt changes in the direction of fluid flow are avoided. Accordingly, a valve member with a fluid flow portion is provided that meets these requirements. Also, an accidental pivotal movement of the valve member by 180° shall not move the valve member from an open position to another open position. That is, no 180° turn of the valve member due to personnel error shall fail to close an initially open fluid path.

The instant disclosure thus teaches a valve, the valve comprising: a valve body having an inlet conduit, an outlet conduit, and a fluid path extending between the inlet conduit and the outlet conduit; the valve further comprising a valve member situated in the fluid path between the inlet conduit and the outlet conduit; wherein the valve member comprises a solid portion and a first port and a second port and a fluid flow portion extending between the first port and the second port; wherein the valve comprises a valve stem anchored to the solid portion of the valve member, the valve stem defining a pivot axis; wherein the valve stem is configured to selectively pivot the valve member about the pivot axis defined by the valve stem to a closed position which closes the fluid path between the inlet conduit and the outlet conduit and to an open position which opens the fluid path between the inlet conduit and the outlet conduit; wherein the fluid flow portion has a profile in a plane perpendicular to the pivot axis; wherein the profile of the fluid flow portion comprises an arcuate segment; wherein the inlet conduit defines an inlet flow axis of fluid flow directly into the fluid flow portion and the outlet conduit defines an outlet flow axis of fluid flow directly from the fluid flow portion; and and wherein the pivot axis is perpendicular to at least one of the inlet flow axis or the outlet flow axis.

According to an aspect, the inlet conduit defines an inlet flow axis and the outlet conduit defines an outlet flow axis; and the pivot axis is perpendicular to both the inlet flow axis and the outlet flow axis.

Advantageously, a pivotal movement of the valve member by 180° about the pivot axis and starting at the open position closes and/or obturates the fluid path.

It is also an object of the instant disclosure to provide a valve member with a fluid flow portion that is suitable for production by milling. The valve member can thus be produced using standard tools. The fluid flow portion advantageously is a recess that can be removed from the solid portion of the valve member by milling.

It is another object of the instant disclosure to provide a valve member with a fluid flow portion that is, completely or at least in part, suitable for production by drilling. The valve member can thus be produced using standard tools. The fluid flow portion advantageously comprises a cylindrical conduit or a bore that can, completely or at least in part, be drilled into the solid portion of the valve member.

It is another object of the instant disclosure to provide a valve member that is compatible with a large number of conventional valves. A ball-type valve member is such a valve member.

It is still an object of the instant disclosure to minimize mechanical forces applied by fluid flow through the fluid flow portion on the valve member. To that end, the arcuate segment is disposed at or near the centre of the valve member. Also, the arcuate segment advantageously exhibits reflection symmetry about axis through the centre of the valve member.

It is a further object of the instant disclosure to minimize vibrations caused by fluid flow through the fluid flow portion. To that end, a bent knee conduit comprising the arcuate segment is disposed at or near the centre of the fluid flow portion.

It is also an object of the instant disclosure to minimize turbulence caused by fluid flow through the fluid flow portion. To that end, the radius of curvature of the knee conduit is at least 1 mm, preferably at least 2 mm or even at least 5 mm. It is also envisaged that the radius of curvature of the knee conduit is at least one tenth of a diameter of a ball-type valve member, preferably at least one fifth of the diameter of a ball-type valve member or even at least half the diameter of a ball-type valve member.

It is yet another object of the instant disclosure to provide a valve member that is compatible with canonical quarter-turn valves. To that end, the arcuate segment forms an arc with an arc angle of at least 60°, preferably at least 70° or even at least 80°. In an embodiment, the arc angle is 90°.

It is yet another object of the instant disclosure to provide a valve that is suitable for use in heating, ventilation, and air-conditioning circuits. Accordingly, a multi-way valve is provided with a valve according to the instant disclosure.

Brief description of the drawings

Various features will become apparent to those skilled in the art from the following detailed description of the disclosed non-limiting embodiments. The drawings that accompany the detailed description can be briefly described as follows:

FIG 1 is a schematic section view of a valve in its open position according to a first embodiment of the present disclosure.

FIG 2 is another schematic section view in a plane perpendicular to that of FIG 1.

FIG 3 is a close-up detailed view showing the curvature of a fluid flow portion with a bent knee conduit.

FIG 4 is another schematic section view of a valve in its open position according to another embodiment of the present disclosure. FIG 4 does not form part of the claimed invention but represents background art that is useful for understanding the invention.

Detailed decription

The valve of the instant disclosure is typically part of a multi-way valve and/or of a valve assembly. According to one aspect of the instant disclosure, a plurality of the valves is arranged in a single multi-way valve.

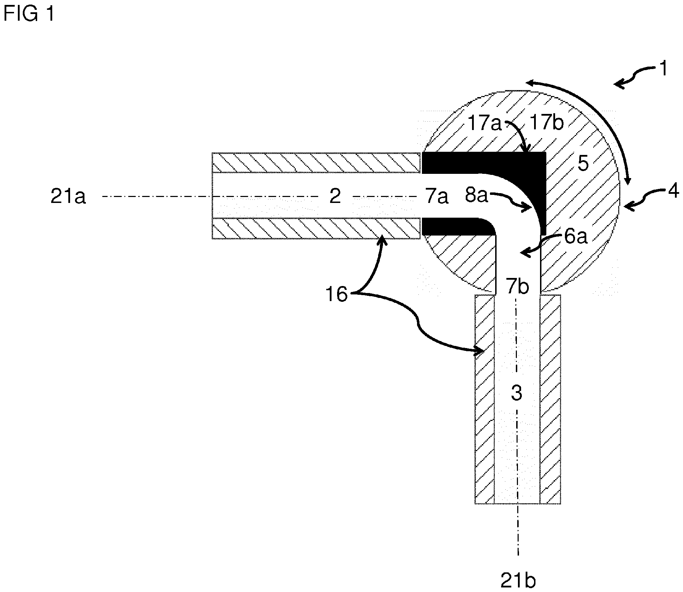

The valve 1 as shown in FIG 1 has an inlet conduit 2 and an outlet conduit 3. One of ordinary skill in the art upon reviewing this disclosure understands that the valve 1 is not limited to a single inlet conduit 2 and not limited to a single outlet conduit 3, and may provide a plurality of inlet conduits and/or a plurality of outlet conduits. A fluid path extends from the inlet conduit 2 to the outlet conduit 3 of the valve 1. The valve as shown on FIG 1 is in an open position as shown in FIG 1. That is, the valve member 4 in the fluid path does not obstruct fluid flow.

The inlet conduit 2 defines an axis of fluid flow 21a through the inlet conduit 2. According to an aspect of the instant disclosure, the inlet conduit 2 defines an axis of laminar fluid flow 21a through the inlet conduit 2. The outlet conduit 3 defines an axis of fluid flow 21b through the outlet conduit 3. According to an aspect of the instant disclosure, the outlet conduit 3 defines an axis of laminar fluid flow 21b through the outlet conduit 3.

A valve member 4 is disposed in the fluid path. The valve member 4 depicted on FIG 1 is, by way of non-limiting example, ball-shaped and/or cylindrical and/or elliptical. The valve member 4 also is pivotal, preferably is pivotal about an axis perpendicular to the drawing plane of FIG 1.

In an embodiment, the valve 1 comprises a valve body 16 that is made of a metallic material such as steel, in particular of austenitic (stainless) steel or of ferrite steel. In an alternate embodiment, the valve body 16 is made of aluminum (alloy) or of brass or of gunmetal. In yet another alternate embodiment, the valve body 16 is made of a polymeric material. According to an aspect, valve body 16 is manufactured via an additive manufacturing technique such as three-dimensional printing. According to a particular aspect, a portion of valve body 16 is manufactured via an additive manufacturing technique such as three-dimensional printing.

The valve member 4 comprises a solid portion 5 that is advantageously made of a ceramic material. The solid portion 5 is preferably made of engineering ceramics, yet more preferably of aluminum oxide ($Al_2O_3$) and/or of silicon carbide (SiC) and/or of zirconium dioxide ($ZrO_2$) and/or of magnesium oxide (MgO). The valve member may be comprised of a ceramics material such as aluminum oxide with a suitable level of purity such as 92%, 96%, or 99%. Higher levels of purity confer advantages in terms of mechanical stiffness and strength and/or dielectric strength.

In an alternate embodiment, the solid portion 5 of valve member 4 is made of a metallic material such as steel, in particular of austenitic (stainless) steel or of ferrite steel. In an alternate embodiment, the solid portion 5 is made of aluminum (alloy) or of brass or of gunmetal. In yet another alternate embodiment, the solid portion 5 is made of a polymeric material. According to an aspect, an additive manufacturing technique such as three-dimensional printing is employed to fabricate the solid portion 5.

Inlet conduit 2 and outlet conduit 3 are advantageously cylindrical or substantially cylindrical. That is, inlet conduit 2 and outlet conduit 3 have got circular or substantially circular cross-sections perpendicular to their respective flow axes 21a, 21b. According to an aspect of the disclosed embodiments, at least one of the inlet conduit 2 or the outlet conduit 3 is a bore or a through-hole. It is envisaged that the two conduits 2 and 3 are both bores or are both through-holes. Inlet conduit 2 and/or outlet conduit 3 may, in alternate embodiments, provide elliptical or polygonal cross-sections.

It is envisaged that inlet conduit 2 has got a minimum cross-section area perpendicular to its flow axis of at least 10 $mm^2$. The cross-section area more preferably is at least 64 $mm^2$, yet more preferably at least 100 $mm^2$. Larger cross-section areas confer advantages in terms of enhanced flow. It is also envisaged that outlet conduit has got a minimum cross-section area perpendicular to its flow axis of at least 10 $mm^2$. The cross-section area more preferably is at least 64 $mm^2$, yet more preferably at least 100 $mm^2$. According to an aspect of the instant disclosure, the minimum cross-section area perpendicular to the flow axis is at least 0.01 times a maximum cross-section of a ball-type valve member, preferably at least 0.05 times the maximum cross-section of a ball-type valve member or even at least 0.1 times the maximum cross-section of a ball-type valve member.

Inlet conduit 2 and outlet conduit 3 provide same or similar cross-section areas perpendicular to their respective flow axes. The cross-section areas of conduits 2 and 3 advantageously differ by less than 30%, yet more preferred by less than 10%, still more preferred by less than 5%. According to an aspect, conduits 2 and 3 of provide fluid paths of same or of similar lengths and/or length dimensions. The length dimensions of the fluid paths of conduits 2 and 3 advantageously differ by less than 30%, yet more preferred by less than 10%, still more preferred by less than 5%.

The aspect ratios of inlet conduit 2 and/or of outlet conduit 3 relate the lengths of their respective fluid paths to their minimum diameters perpendicular to their fluid paths. The aspect ratios of inlet conduit 2 and/or of outlet conduit 3 are preferably less than ten, yet more preferably less than five, still more preferably less than two. Smaller aspect values confer advantages in terms of precisely defined flow axes.

FIG 1 shows valve 1 in its open position. Valve member 4 is oriented so as to enable fluid flow through a fluid flow portion 6a of the valve member 4. In an embodiment, the fluid flow portion 6a is a conduit or a fluid flow channel.

Inlet conduit 2 provides a supply end for supply of a fluid to the valve 1. Likewise, outlet conduit 3 provides a return end. A fluid such as water and/or a blend thereof, in particular a blend of water and of at least one compound selected from

- calcium chloride,
- ethanol,
- ethylene glycol,
- glycerol,
- magnesium chloride,
- methanol,
- potassium acetate,
- potassium formate,
- propylene glycol, or
- sodium chloride

thus enters the valve 1 via inlet conduit 2, then flows via fluid flow portion 6a and leaves via outlet conduit 3. The fluid entering via inlet conduit 2 and leaving via outlet conduit 3 may as well be a combustible fluid and/or a

- R-401A,
- R-404A,
- R-406A,
- R-407A,
- R-407C,
- R-408A,
- R-409A,
- R-410A,
- R-438A,

- R-500, or
- R-502

refrigerant. The fluid may also be (a blend comprising) ammonia and/or carbon dioxide. The above lists are not exhaustive.

To that end, inlet conduit 2, outlet conduit 3, and fluid flow portion 6a are in fluid communication when the valve 1 is in its open position. FIG 1 shows a first port 7a of valve member 4 that enables fluid communication between inlet conduit 2 and fluid flow portion 6a. Port 7a is advantageously sealed by a gasket or by an O-ring enveloping around the aperture. According to an aspect, the first port 7a is a first aperture. FIG 1 also shows a second port 7b of valve member 4 that enables fluid communication between fluid flow portion 6a and outlet conduit 3. According to an aspect, the second port 7b is a second aperture. Port 7b is advantageously sealed by a gasket or by an O-ring enveloping around the aperture.

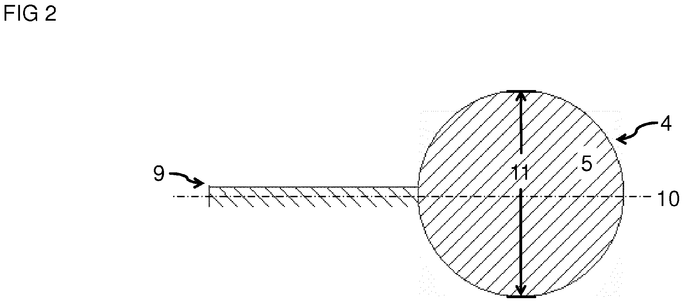

Now turning to FIG 2, a valve stem 9 for actuation of valve member 4 is shown. The valve stem 9 that is anchored the solid portion 5 of valve member 4 may, by way of non-limiting example, be employed for pivotal movement of valve member 4. A valve stem 9 such as a plunger is then advantageously joined to the solid portion 5 of the valve member 4. That plunger 9 enables pivotal movement of valve member 4 about an axis perpendicular to the drawing plane of FIG 1.

FIG 2 also illustrates a diameter dimension 11 of valve member 4. In an embodiment, valve member 4 is a ball-type valve member 4. That is, valve member 4 has spherical symmetry or substantially spherical symmetry. The diameter dimension 11 of valve member 4 hence is the largest distance between any two points on the outer envelope of the valve member 4.

The valve member 4 may also have cylindrical or elliptical symmetry with a pivot axis 10 defined by valve stem 9. The diameter dimension 11 in this case refers to the distance between two points, each point lying on an axis perpendicular to the pivot axis 10. The diameter dimension 11 thus is the largest such dimension between two points on the outer envelope of valve member 4.

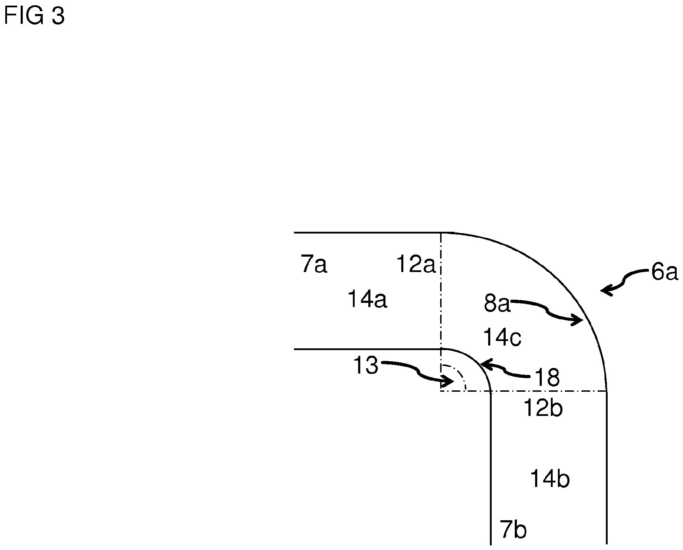

Details of the fluid flow portion 6a are depicted in FIG 3. The fluid flow portion 6a of FIG 3 is an elbow-shaped and/or L-shaped conduit with a first cylindrical conduit 14a and with a second cylindrical conduit 14b. According to an aspect of the disclosed embodiments, cylindrical conduits 14a and 14b are legs of the fluid flow portion 6a of valve member 4. The first cylindrical conduit 14a is in fluid communication with second cylindrical conduit 14b via a bent knee conduit 14c. The knee conduit 14c preferably is a central conduit. Laminar flow, in particular laminar flow in the absence of turbulence, of a fluid through cylindrical conduits 14a, 14b defines an axis for each cylindrical conduit. In an embodiment, laminar flow through the cylindrical conduits 14a, 14b is characterized by a Reynolds number Re < 1200. The (flow) axes of cylindrical portions 14a, 14b are advantageously perpendicular such as in an embodiment wherein the fluid flow portion 6a is an L-shaped conduit. The (flow) axes of cylindrical portions 14a, 14b may also be substantially perpendicular such as in an embodiment where the fluid flow portion 6a is an elbow-shaped conduit.

The knee conduit 14c is the central portion of fluid flow portion 6a. FIG 3 shows details of conduit 14c. The knee conduit 14c has profile comprising an outer portion. The outer portion is an arcuate segment 8a. The arcuate segment 8a of knee conduit 14c is a segment of a wall of conduit 14c. This wall of conduit 14c separates the fluid flow portion 6a of the valve member 4 from the solid portion 5 of the valve member 4.

The arcuate segment 8a has a first end. A first axis 12a is perpendicular to the arcuate segment 8a and crosses the arcuate segment 8a at its first end. The arcuate segment 8a also has a second end sitting opposite the first end. A second axis 12b is also perpendicular to the arcuate segment 8a and crosses the arcuate segment 8a at its second end.

The axes 12a and 12b of arcuate segment 8a advantageously form an arc angle 13 between 120° and 60°, preferably between 110° and 70°, yet more preferably between 100° and 80°. In an embodiment, the arc angle 13 is 90° or substantially 90°. An arc angle 13 of 90° or close to 90° yields a valve member 4 suitable for quarter-turn valves.

The length of arcuate segment 8a is crucial to the inhibition of turbulence due to an abrupt change in direction of fluid flow. Arcuate segment 8a advantageously has a minimum length thereby inhibiting abrupt changes in flow direction. In an embodiment, the length of arcuate segment 8a is at least 20% of the diameter dimension 11 of valve member 4, preferably at least 30% or even 50% of the diameter dimension 11. According to an aspect, the arcuate segment 8a has a length dimension $l$ of at least 2 mm, preferably of at least 5 mm or even 10 mm. It is also envisaged that the arcuate segment 8a has a length dimension $l$ that is at least one tenth of the (spherical) diameter 11 of the (ball-type) valve member 4, preferably is at least one fifth of the (spherical) diameter 11 of a (ball-type) valve member 4 or even at least half the (spherical) diameter 11 of the (ball-type) valve member 4.

The length dimension $l$ of arcuate segment 8a is the length of a path s between the first end and the second end of arcuate segment 8a. The length dimension $l$ of arcuate segment 8a thus is the curve integral between the first end and the second end along a suitably parametrised path s of segment 8a:

$$l = \int_{\text{first end}}^{\text{second end}} 1 \cdot \mathrm{ds}.$$

The cross-section of knee conduit 14c also has portion that is a segment 18 on the inside of the bent. Segment 18 on the inside of the bent is closer to the valve body 16 than segment 8a on the outside of the bent. Segment 18 of knee conduit 14c also is a segment of a wall of knee conduit 14c. This wall of conduit 14c separates the fluid flow portion 6a of the valve member 4 from the solid portion 5 of the valve member 4.

The segment 18 on the inside of the bent has a first end and a second end sitting opposite the first end. The length dimension $m$ of segment 18 on the inside of the bent is the length of a path $p$ between the first end and the second end of segment 18. The length dimension $m$ of segment 18 on the inside of the bent thus is the curve integral between the first end and the second end along a suitably parametrised path $p$ of segment 18:

$$ m = \int_{\text{first end}}^{\text{second end}} 1 \cdot \mathrm{dp}. $$

The length of segment 18 on the inside of the bent generally is less than the length of segment 8a on the outside of the bent. According to an aspect, the segment 18 on the inside of the bent has a length dimension $m$ of at least 1 mm, preferably of at least 2 mm or even 5 mm. It is also envisaged that the segment 18 on the inside of the bent has a length dimension of at least one tenth of the (spherical) diameter 11 of the (ball-type) valve member 4, preferably of at least one fifth of the (spherical) diameter 11 of the (ball-type) valve member 4 or even of at least half the (spherical) diameter 11 of the (ball-type) valve member 4.

It is envisaged that the segment 18 on the inside of the bent has curved shape. It is also envisaged that the segment 18 on the inside of the bent is a straight line connecting its first end to its second end.

Conduits 14a and 14b are advantageously cylindrical or substantially cylindrical. That is, portions 14a and 14b have got cross-sections perpendicular to their respective flow axes that are circular or substantially circular. Conduits 14a, 14b may, in other embodiments, have cross-sections perpendicular to their respective flow axes that are elliptical or polygonal. According to an aspect, at least one portion 14a, 14b is a bore. It is envisaged that the two portions 14a, 14b are both bores.

It is envisaged that cylindrical conduit 14a has got a minimum cross-section area perpendicular to its flow axis of at least 10 mm². The cross-section area more preferably is at least 64 mm², yet more preferably at least 100 mm². According to an aspect of the instant disclosure, the cylindrical conduit 14a has got a minimum cross-section area perpendicular to its flow axis of at least 0.01 times a maximum cross-section of the (ball-type valve) member, preferably of at least 0.05 times the maximum cross-section of the (ball-type) valve 4 member or even of at least 0.1 times the maximum cross-section of the (ball-type) valve member 4.

It is also envisaged that cylindrical conduit 14b has got a minimum cross-section area perpendicular to its flow axis of at least 10 mm². The cross-section area more preferably is at least 64 mm², yet more preferably at least 100 mm². According to an aspect of the instant disclosure, the cylindrical conduit 14b has got a minimum cross-section area perpendicular to its flow axis of at least 0.01 times a maximum cross-section of the (ball-type valve) member, preferably of at least 0.05 times the maximum cross-section of the (ball-type) valve 4 member or even of at least 0.1 times the maximum cross-section of the (ball-type) valve member 4.

Larger cross-section areas confer advantages in terms of enhanced flow.

Conduits 14a and 14b have same or similar cross-section areas perpendicular to their respective flow axes. The cross-section areas of conduits 14a and 14b advantageously differ by less than 30%, yet more preferred by less than 10%, still more preferred by less than 5%. According to an aspect, conduits 14a and 14b have fluid paths of same or of similar lengths and/or length dimensions. The length dimensions of the fluid paths of portions 14a and 14b advantageously differ by less than 30%, yet more preferred by less than 10%, still more preferred by less than 5%.

The aspect ratios of portions 14a and 14b relate the lengths of their respective fluid paths to their minimum diameters perpendicular to their respective flow axes. The aspect ratios of conduits 14a and 14b are preferably less than twenty, yet more preferred less than ten, still more preferred less than five. Smaller aspect values confer advantages in terms of precisely defined flow axes.

As shown in FIG 1, valve member 4 is made up of separable portions 17a, 17b. More specifically, the solid portion 5 of valve member 4 provides a port and/or provides a slot. A portion 17a with conduits 14a and 14c is thus be inserted into the slot or port of the portion 17b. Portion 17a is mounted inside the slot of portion 17b by interference fit.

It is envisaged that at least one of the portions 17a and 17b is manufactured via an additive manufacturing technique such as three-dimensional printing. It is also envisaged that each of the portions 17a, 17b is manufactured via an additive manufacturing technique such as three-dimensional printing.

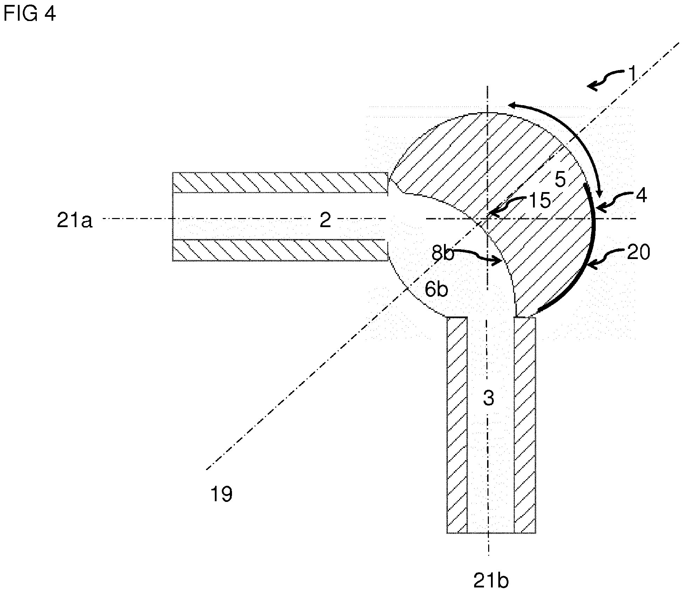

The embodiment shown on FIG 4 does not form part of the invention but represents background art that use useful for understanding the invention.

Now referring to FIG 4, a valve member 4 is shown with no segment on the inside of a bent. That is, the length of that segment $m$ is zero. The fluid flow portion 6b then becomes a recess in the solid portion 5 of valve member 4.

The flow portion 6b of valve member 4 still provides a profile in a plane perpendicular to its pivot axis 10 with an arcuate segment 8b. The arcuate segment 8b as shown on FIG 4 also provides a first end and a second end sitting opposite the first end. The length dimension $n$ of arcuate segment 8b is the length of a path $q$ between the first end and the second end of arcuate segment 8b. The length dimension $n$ of arcuate segment 8b thus is the curve integral between the first end and the second end along a suitably parametrised path *q* of arcuate segment 8b:

$$n = \int_{\text{first end}}^{\text{second end}} 1 \cdot \mathrm{dq}.$$

According to an aspect, the arcuate segment 8b as shown on FIG 4 has a length dimension *n* of at least 3 mm, preferably of at least 7 mm or even 12 mm. It is also envisaged that the arcuate segment 8b has a length dimension of at least one eighths of the (spherical) diameter of the (ball-type) valve member 4, preferably of at least one fourth of the (spherical) diameter of the (ball-type) valve member 4 or even of at least one third the (spherical) diameter of the (ball-type) valve member 4.

It should be understood that the foregoing relates only to certain embodiments of the disclosure and that numerous changes may be made therein without departing from the scope of the disclosure as defined by the following claims. It should also be understood that the disclosure is not restricted to the illustrated embodiments and that various modifications can be made within the scope of the following claims.

Reference numerals

| | |
|---|---|
| 1 | valve |
| 2 | inlet conduit |
| 3 | outlet conduit |
| 4 | valve member |
| 5 | solid portion |
| 6a, 6b | fluid flow portion |
| 7a | first port |
| 7b | second port |
| 8a, 8b | arcuate segment |
| 9 | valve stem |
| 10 | pivot axis |
| 11 | diameter dimension |
| 12a, 12b | axes perpendicular to the arcuate segment |
| 13 | arc angle |
| 14a, 14b | cylindrical conduits |
| 14c | knee conduit |
| 15 | centre of the valve member 4 |
| 16 | valve body |
| 17a, 17b | separable portions of valve member 4 |
| 18 | segment on the inside of the bent |
| 19 | bisecting axis |
| 20 | shutter surface |
| 21 a, 21b | flow axes |

**Claims**

**1.** A valve (1), the valve (1) comprising:

a valve body having an inlet conduit (2), an outlet conduit (3), and a fluid path extending between the inlet conduit (2) and the outlet conduit (3); the valve (1) further comprising a valve member (4) situated in the fluid path between the inlet conduit (2) and the outlet conduit (3); wherein the valve member (4) comprises a solid portion (5) and a first port (7a) and a second port (7b) and a fluid flow portion (6a; 6b) extending between the first port (7a) and the second port (7b); wherein the valve (1) comprises a valve stem (9) anchored to the solid portion (5) of the valve member (4), the valve stem (9) defining a pivot axis (10); wherein the valve stem (9) is configured to selectively pivot the valve member (4) about the pivot axis (10) defined by the valve stem (9) to a closed position which closes the fluid path between the inlet conduit (2) and the outlet conduit (3) and to an open position which opens the fluid path between the inlet conduit (2) and the outlet conduit (3); wherein the fluid flow portion (6a; 6b) has a profile in a plane perpendicular to the pivot axis (10); wherein the profile of the fluid flow portion (6a; 6b) comprises an arcuate segment (8a; 8b); wherein the inlet conduit (2) defines an inlet flow axis (21a) of fluid flow directly into the fluid flow portion (6a; 6b) and the outlet conduit (3) defines an outlet flow axis (21b) of fluid flow directly from the fluid flow portion (6a; 6b); wherein the pivot axis (10) is perpendicular to at least one of the inlet flow axis (21a) or the outlet flow axis (21b); wherein the fluid flow portion comprises a first cylindrical conduit (14a) and a second cylindrical conduit (14b) and a knee conduit (14c), the knee conduit (14c) having a profile in a plane perpendicular to the pivot axis (10) and the profile of the knee conduit (14c) comprising the arcuate segment (8a); the knee conduit (14c) is interposed between the first cylindrical conduit (14a) and the second cylindrical conduit (14b), **characterized in that** the valve member (4) comprises first and second separable portions (17a, 17b); and **in that** the solid portion (5) comprises the second separable portion (17b), the second separable portion (17b) having a slot such that the first separable portion (17a) can be inserted into the slot of the second separable portion (17b); and **in that** the first separable portion (17a) comprises the first cylindrical conduit (14a) and the knee conduit (14c); and **in that** the first separable portion (17a) is mounted inside the slot of the second separable portion (17b) by an interference fit.

2. The valve (1) according to claim 1, wherein a pivotal movement of the valve member (4) by 180° about the pivot axis (10) and starting at the open position closes the fluid path.

3. The valve (1) according to any of the claims 1 or 2, wherein the fluid flow portion comprises a conduit (14a, 14b, 14c) perforating the solid portion (5) of the valve member (4).

4. The valve (1) according to any of the claims 1 to 3,

   wherein the first cylindrical conduit (14a) defines a flow axis of the first cylindrical conduit (14a); wherein the first cylindrical conduit (14a) has first end and a second end and a length dimension between the first end of the first cylindrical conduit (14a) and the second end of the first cylindrical conduit (14a), the length dimension of the first cylindrical conduit (14a) extending along the flow axis of the first cylindrical conduit (14a); wherein the length dimension of the first cylindrical conduit (14a) exceeds 2 mm; wherein the second cylindrical conduit (14b) defines a flow axis of the second cylindrical conduit (14b); wherein the second cylindrical conduit (14b) has first end and a second end and a length dimension between the first end of the second cylindrical conduit (14b) and the second end of the second cylindrical conduit (14b), the length dimension of the second cylindrical conduit (14a) extending along the flow axis of the second cylindrical conduit (14b); and wherein the length dimension of the second cylindrical conduit (14b) exceeds 2 mm.

5. The valve (1) according to any of the claims 1 to 4,

   wherein the valve member (4) is a ball-type valve member; wherein the valve member (4) has a centre (15), the centre (15) being a geometrical centre of the valve member (4); wherein the arcuate segment (8a; 8b) defines a bisecting axis (19) through the centre (15); and wherein the arcuate segment (8a; 8b) exhibits reflection symmetry about the bisecting axis (19).

6. The valve (1) according to any of the claims 1 to 5,

   wherein the valve member (4) has an outer surface; and wherein the centre (15) is disposed equidistant from or substantially equidistant from any point on the outer surface of the valve member (4).

7. The valve (1) according to any of the claims 1 to 6, wherein the arcuate segment (8a; 8b) is perpendicular to the pivot axis (10).

8. The valve (1) according to any of the claims 1 to 7, wherein the arcuate segment (8a; 8b) has a first side facing the fluid flow portion (6a; 6b) of the valve member (5) and a second side facing the solid portion (5) of the valve member (4).

9. The valve (1) according to any of the claims 1 to 8, wherein a pivotal movement of the valve member (4) about the pivot axis (10) and starting at the open position by 180° always closes the fluid path.

10. The valve (1) according to any of the claims 1 to 9,

    wherein the arcuate segment (8a; 8b) has a first end and a second end, the second end being disposed opposite the first end, and an arc length dimension between the first end and the second end; and wherein the arc length dimension is at least 2 mm.

11. The valve (1) according to any of the claims 1 to 10,

    wherein the arcuate segment (8a; 8b) has a first end and a second end, the second end being disposed opposite the first end, and an arc length dimension between the first end and the second end; and wherein the valve member (4) has a diameter dimension (11); and wherein the arc length dimension is at least one fifth of the diameter dimension (11) of the valve member (4).

12. The valve (1) according to any of the claims 1 to 11,

    wherein the arcuate segment (8a; 8b) has a first end and a second end, the second end sitting opposite the first end, the arcuate segment (8a; 8b) defining a first axis (12a) perpendicular to the arcuate segment (8a; 8b) at the first end of the arcuate segment (8a; 8b); the arcuate segment (8a; 8b) defining a second axis (12b) perpendicular to the arcuate segment (8a; 8b) at the second end of the arcuate segment (8a; 8b); wherein the first axis (12a) and the second axis (12b) define an arc angle (13); and wherein the arc angle (13) is at least 60°.

13. The valve (1) according to any of the claims 1 to 12,

wherein the outer surface of the valve member (4) comprises a shutter surface (20);

wherein, in the closed position, the shutter surface (20) faces at least one valve port, the at least one port being selected from the inlet conduit (2) or the outlet conduit (3) such that the shutter surface (20) obstructs fluid flow into and out of the at least one valve port and

such that the fluid path (6a; 6b) between the inlet conduit (2) and the outlet (3) conduit is closed.

14. The valve (1) according to any of the claims 1 to 13, wherein the fluid flow portion (6a; 6b) defines a path of fluid flow from the first port (7a) to the second port (7b); and wherein the pivot axis (10) is perpendicular to the entire path of fluid flow.


**Patentansprüche**

1. Ventil (1), das Folgendes umfasst:

einen Ventilkörper mit einem Einlasskanal (2), einem Auslasskanal (3) und einem zwischen dem Einlasskanal (2) und dem Auslasskanal (3) verlaufenden Fluidpfad;

wobei das Ventil (1) ferner ein Ventilelement (4) umfasst, das sich im Fluidpfad zwischen dem Einlasskanal (2) und dem Auslasskanal (3) befindet;

wobei das Ventilelement (4) einen festen Abschnitt (5) und eine erste Öffnung (7a) und eine zweite Öffnung (7b) und einen zwischen der ersten Öffnung (7a) und der zweiten Öffnung (7b) verlaufenden Fluidströmungsabschnitt (6a; 6b) umfasst,

wobei das Ventil (1) einen Ventilschaft (9) umfasst, der an dem festen Abschnitt (5) des Ventilelements (4) verankert ist und eine Drehachse (10) definiert;

wobei der Ventilschaft (9) so konfiguriert ist, dass er das Ventilelement (4) um die von ihm definierte Drehachse (10) in eine geschlossene Position, in der der Fluidpfad zwischen dem Einlasskanal (2) und dem Auslasskanal (3) versperrt ist, beziehungsweise in eine offene Position dreht, in der der Fluidpfad zwischen dem Einlasskanal (2) und dem Auslasskanal (3) offen ist;

wobei der Fluidströmungsabschnitt (6a; 6b) in einer senkrecht zur Drehachse (10) verlaufenden Ebene ein Profil aufweist;

wobei das Profil des Fluidströmungsabschnitts (6a; 6b) ein bogenförmiges Segment (8a; 8b) umfasst;

wobei der Einlasskanal (2) eine Einströmachse (21a) der direkt in den Fluidströmungsabschnitt (6a; 6b) verlaufenden Fluidströmung und der Auslasskanal (3) eine Ausströmachse (21b) der direkt aus dem Fluidströmungsabschnitt (6a; 6b) verlaufenden Fluidströmung definiert;

wobei die Drehachse (10) senkrecht zur Einströmachse (21a) und/oder zur Ausströmachse (21b) verläuft;

wobei der Fluidströmungsabschnitt einen ersten zylinderförmigen Kanal (14a) und einen zweiten zylinderförmigen Kanal (14b) und einen abgewinkelten Kanal (14c) umfasst, wobei der abgewinkelte Kanal (14c) in einer senkrecht zur Drehachse (10) verlaufenden Ebene ein Profil aufweist und das Profil des abgewinkelten Kanals (14c) das bogenförmige Segment (8a) umfasst;

wobei der abgewinkelte Kanal (14c) zwischen dem ersten zylinderförmigen Kanal (14a) und dem zweiten zylinderförmigen Kanal (14b) angeordnet ist;

**dadurch gekennzeichnet, dass**

das Ventilelement (4) einen ersten und einen zweiten abtrennbaren Abschnitt (17a, 17b) umfasst und dass

der feste Abschnitt (5) den zweiten abtrennbaren Abschnitt (17b) umfasst, der eine Nut aufweist, so dass der erste abtrennbare Abschnitt (17a) in die Nut des zweiten abtrennbaren Abschnitts (17b) eingesetzt werden kann, und dass der erste abtrennbare Abschnitt (17a) den ersten zylinderförmigen Kanal (14a) und den abgewinkelten Kanal (14c) umfasst und dass

der erste abtrennbare Abschnitt (17a) durch Übermaßpassung in der Nut des zweiten abtrennbaren Abschnitts (17b) befestigt ist.

2. Das Ventil (1) nach Anspruch 1, wobei eine in der offenen Position beginnende Drehbewegung des Ventilelements (4) um 180° um die Drehachse (10) den Fluidpfad versperrt.

3. Ventil (1) nach einem der Ansprüche 1 oder 2, wobei der Fluidströmungsabschnitt einen Kanal (14a, 14b, 14c) umfasst, der durch den festen Abschnitt (5) des Ventilelements (4) hindurch verläuft.

4. Das Ventil (1) nach einem der Ansprüche 1 bis 3, wobei der erste zylinderförmige Kanal (14a) eine Strömungsachse des ersten zylinderförmigen Kanals (14a) definiert,

wobei der erste zylinderförmige Kanal (14a) ein erstes und ein zweites Ende und ein Längenmaß zwischen dem ersten und dem zweiten Ende des ersten zylinderförmigen Kanals (14a) aufweist, wobei das Längenmaß des ersten zylinderförmigen Kanals (14a) entlang der Strömungsachse des ersten zylinderförmigen Kanals (14a) verläuft,

wobei das Längenmaß des ersten zylinderförmigen Kanals (14a) mehr als 2 mm beträgt,

wobei der zweite zylinderförmige Kanal (14b) eine Strömungsachse des zweiten zylinderförmigen Kanals (14b) definiert,

wobei der zweite zylinderförmige Kanal (14b) ein erstes und ein zweites Ende und ein Längenmaß zwischen dem ersten und dem zweiten Ende des zweiten zylinderförmigen Kanals (14b) aufweist, wobei das Längenmaß des zweiten zylinderförmigen Kanals (14b) entlang der Strömungsachse des zweiten zylinderförmigen Kanals (14b) verläuft, und

wobei das Längenmaß des zweiten zylinderförmigen Kanals (14b) mehr als 2 mm beträgt.

5. Das Ventil (1) nach einem der Ansprüche 1 bis 4, wobei es sich bei dem Ventilelement (4) um ein kugelartiges Ventilelement handelt,

wobei das Ventilelement (4) einen Mittelpunkt (15) aufweist, bei dem es sich um einen geometrischen Mittelpunkt des Ventilelements (4) handelt,

wobei das bogenförmige Segment (8a; 8b) eine durch den Mittelpunkt (15) verlaufende, halbierende Achse (19) definiert und

wobei das bogenförmige Segment (8a; 8b) eine Spiegelsymmetrie an der halbierenden Achse (19) aufweist.

6. Das Ventil (1) nach einem der Ansprüche 1 bis 5, wobei das Ventilelement (4) eine Außenfläche aufweist und

wobei der Mittelpunkt (15) in gleichem oder in im Wesentlichen gleichem Abstand zu jedem beliebigen Punkt an der Außenfläche des Ventilelements (4) angeordnet ist.

7. Das Ventil (1) nach einem der Ansprüche 1 bis 6, wobei das bogenförmige Segment (8a; 8b) senkrecht zur Drehachse (10) verläuft.

8. Das Ventil (1) nach einem der Ansprüche 1 bis 7, wobei das bogenförmige Segment (8a; 8b) eine erste Seite aufweist, die zu dem Fluidströmungsabschnitt (6a; 6b) des Ventilelements (5) weist, und eine zweite Seite, die zu dem festen Abschnitt (5) des Ventilelements (4) weist.

9. Das Ventil (1) nach einem der Ansprüche 1 bis 8, wobei eine in der offenen Position beginnende Drehbewegung des Ventilelements (4) um 180° um die Drehachse (10) den Fluidpfad stets versperrt.

10. Das Ventil (1) nach einem der Ansprüche 1 bis 9, wobei das bogenförmige Segment (8a; 8b) ein erstes und ein zweites Ende, wobei das zweite Ende dem ersten Ende gegenüber angeordnet ist, und ein Bogenlängenmaß zwischen dem ersten und dem zweiten Ende aufweist und

wobei das Bogenlängenmaß mindestens 2 mm beträgt.

11. Das Ventil (1) nach einem der Ansprüche 1 bis 10, wobei das bogenförmige Segment (8a; 8b) ein erstes und ein zweites Ende, wobei das zweite Ende dem ersten Ende gegenüber angeordnet ist, und ein Bogenlängenmaß zwischen dem ersten und dem zweiten Ende aufweist und

wobei das Ventilelement (4) ein Durchmessermaß (11) aufweist und

wobei das Bogenlängenmaß mindestens ein Fünftel des Durchmessermaßes (11) des Ventilelements (4) beträgt.

12. Das Ventil (1) nach einem der Ansprüche 1 bis 11, wobei das bogenförmige Segment (8a; 8b) ein erstes und ein zweites Ende aufweist, das zweite Ende dem ersten Ende gegenüberliegt, das bogenförmige Segment (8a; 8b) an seinem ersten Ende eine senkrecht zu dem bogenförmigen Segment (8a; 8b) verlaufende erste Achse (12a) und an seinem zweiten Ende eine senkrecht zu dem bogenförmigen Segment (8a; 8b) verlaufende zweite Achse (12b) definiert,

wobei die erste Achse (12a) und die zweite Achse (12b) einen Bogenwinkel (13) definieren und

wobei der Bogenwinkel (13) mindestens 60° beträgt.

13. Das Ventil (1) nach einem der Ansprüche 1 bis 12, wobei die Außenfläche des Ventilelements (4) eine Verschlussfläche (20) umfasst,

wobei die Verschlussfläche (20) in der geschlossenen Position zu mindestens einer Ventilöffnung weist, die unter dem Einlasskanal (2) und dem Auslasskanal (3) ausgewählt ist, so dass die Verschlussfläche (20) die Fluidströmung in die und aus der mindestens einen Ventilöffnung blockiert und

dass der Fluidpfad (6a; 6b) zwischen dem Einlasskanal (2) und dem Auslasskanal (3) versperrt ist.

14. Das Ventil (1) nach einem der Ansprüche 1 bis 13, wobei der Fluidströmungsabschnitt (6a; 6b) einen Weg für die Fluidströmung aus der ersten Öffnung (7a) zur zweiten Öffnung (7b) definiert und die Drehachse (10) senkrecht zum gesamten Fluidströmungsweg verläuft.

**Revendications**

1. Soupape (1), la soupape (1) comprenant :

un corps de soupape ayant un conduit d'entrée (2), un conduit de sortie (3) et un trajet de fluide s'étendant entre le conduit d'entrée (2) et le conduit de sortie (3) ;

la soupape (1) comprenant en outre un élément de soupape (4) situé dans le trajet de fluide entre le conduit d'entrée (2) et le conduit de sortie (3) ;

dans laquelle l'élément de soupape (4) comprend une partie solide (5) et un premier orifice (7a) et un deuxième orifice (7b) et une partie d'écoulement de fluide (6a ; 6b) s'étendant entre le premier orifice (7a) et le deuxième orifice (7b) ;

dans laquelle la soupape (1) comprend une tige de soupape (9) ancrée à la partie solide (5) de l'élément de soupape (4), la tige de soupape (9) définissant un axe de pivotement (10) ;

dans laquelle la tige de soupape (9) est configurée pour faire pivoter sélectivement l'élément de soupape (4) autour de l'axe de pivotement (10) défini par la tige de soupape (9) vers une position fermée qui ferme le trajet de fluide entre le conduit d'entrée (2) et le conduit de sortie (3) et vers une position ouverte qui ouvre le trajet de fluide entre le conduit d'entrée (2) et le conduit de sortie (3) ;

dans laquelle la partie d'écoulement de fluide (6a ; 6b) a un profil dans un plan perpendiculaire à l'axe de pivotement (10) ;

dans laquelle le profil de la partie d'écoulement de fluide (6a ; 6b) comprend un segment arqué (8a ; 8b) ;

dans laquelle le conduit d'entrée (2) définit un axe d'écoulement d'entrée (21a) d'écoulement de fluide directement dans la partie d'écoulement de fluide (6a ; 6b) et le conduit de sortie (3) définit un axe d'écoulement de sortie (21b) d'écoulement de fluide directement à partir de la partie d'écoulement de fluide (6a ; 6b) ;

dans laquelle l'axe de pivotement (10) est perpendiculaire à au moins l'un de l'axe d'écoulement d'entrée (21a) ou de l'axe d'écoulement de sortie (21b) ;

dans laquelle la partie d'écoulement de fluide comprend un premier conduit cylindrique (14a) et un deuxième conduit cylindrique (14b) et un conduit coudé (14c), le conduit coudé (14c) ayant un profil dans un plan perpendiculaire à l'axe de pivotement (10) et le profil du conduit coudé (14c) comprenant le segment arqué (8a) ;

le conduit coudé (14c) est interposé entre le premier conduit cylindrique (14a) et le deuxième conduit cylindrique (14b),

**caractérisée en ce que**

l'élément de soupape (4) comprend des première et deuxième parties séparables (17a, 17b) ; et **en ce que**

la partie solide (5) comprend la deuxième partie séparable (17b), la deuxième partie séparable (17b) ayant une fente de sorte que la première partie séparable (17a) puisse être insérée dans la fente de la deuxième partie séparable (17b) ; et **en ce que**

la première partie séparable (17a) comprend le premier conduit cylindrique (14a) et le conduit coudé (14c) ; et **en ce que**

la première partie séparable (17a) est montée à l'intérieur de la fente de la deuxième partie séparable (17b) par un ajustement serré.

2. La soupape (1) selon la revendication 1, dans laquelle un mouvement pivotant de l'élément de soupape (4) de 180° autour de l'axe de pivotement (10) et commençant à la position ouverte ferme le trajet de fluide.

3. La soupape (1) selon l'une des revendications 1 ou 2, dans laquelle la partie d'écoulement de fluide comprend un conduit (14a, 14b, 14c) perforant la partie solide (5) de l'élément de soupape (4).

4. La soupape (1) selon l'une des revendications 1 à 3, dans laquelle le premier conduit cylindrique (14a) définit un axe d'écoulement du premier conduit cylindrique (14a) ;

dans laquelle le premier conduit cylindrique (14a) a une première extrémité et une deuxième extrémité et une dimension de longueur entre la première extrémité du premier conduit cylindrique (14a) et la deuxième extrémité du premier conduit cylindrique (14a), la dimension de longueur du premier conduit cylindrique (14a) s'étendant le long de l'axe d'écoulement du premier conduit cylindrique (14a) ;

dans laquelle la dimension de longueur du premier conduit cylindrique (14a) dépasse 2 mm ;

dans laquelle le deuxième conduit cylindrique (14b) définit un axe d'écoulement du deuxième conduit cylindrique (14b) ;

dans laquelle le deuxième conduit cylindrique (14b) a une première extrémité et une deuxième extrémité et une dimension de longueur entre la première extrémité du deuxième conduit cylindrique (14b) et la deuxième extrémité du deuxième conduit cylindrique (14b), la dimension de longueur du deuxième conduit cylindrique (14) s'étendant le long de l'axe d'écoulement du deuxième conduit cylindrique (14b) ; et

dans laquelle la dimension de longueur du deuxième conduit cylindrique (14b) dépasse 2 mm.

5. La soupape (1) selon l'une des revendications 1 à 4, dans laquelle l'élément de soupape (4) est un élément de soupape de type à bille ;

dans laquelle l'élément de soupape (4) a un centre (15), le centre (15) étant un centre géométrique de l'élément de soupape (4) ;

dans laquelle le segment arqué (8a ; 8b) définit un axe de bissectrice (19) à travers le centre (15) ; et

dans laquelle le segment arqué (8a ; 8b) présente une symétrie de réflexion autour de l'axe de bissectrice (19).

6. Soupape (1) selon l'une des revendications 1 à 5, dans laquelle l'élément de soupape (4) a une surface externe ; et

dans laquelle le centre (15) est disposé à équidistance ou essentiellement à équidistance de n'importe quel point sur la surface externe de l'élément de soupape (4).

7. La soupape (1) selon l'une des revendications 1 à 6, dans laquelle le segment arqué (8a ; 8b) est perpendiculaire à l'axe de pivotement (10).

8. La soupape (1) selon l'une des revendications 1 à 7, dans laquelle le segment arqué (8a ; 8b) a un premier côté faisant face à la partie d'écoulement de fluide (6a ; 6b) de l'élément de soupape (5) et un deuxième côté faisant face à la partie solide (5) de l'élément de soupape (4).

9. Soupape (1) selon l'une des revendications 1 à 8, dans laquelle un mouvement pivotant de l'élément de soupape (4) autour de l'axe de pivotement (10) et commençant à la position ouverte de 180° ferme toujours le trajet de fluide.

10. Soupape (1) selon l'une des revendications 1 à 9, dans laquelle le segment arqué (8a ; 8b) a une première extrémité et une deuxième extrémité, la deuxième extrémité étant disposée de manière opposée à la première extrémité, et une dimension de longueur d'arc entre la première extrémité et la deuxième extrémité ; et
dans laquelle la dimension de longueur d'arc est d'au moins 2 mm.

11. La soupape (1) selon l'une des revendications 1 à 10, dans laquelle le segment arqué (8a ; 8b) a une première extrémité et une deuxième extrémité, la deuxième extrémité étant disposée de manière opposée à la première extrémité, et une dimension de longueur d'arc entre la première extrémité et la deuxième extrémité ; et
dans laquelle l'élément de soupape (4) a une dimension de diamètre (11) ; et
dans laquelle la dimension de longueur d'arc est d'au moins un cinquième de la dimension de diamètre (11) de l'élément de soupape (4).

12. La soupape (1) selon l'une des revendications 1 à 11, dans laquelle le segment arqué (8a ; 8b) a une première extrémité et une deuxième extrémité, la deuxième extrémité étant opposée à la première extrémité, le segment arqué (8a ; 8b) définissant un premier axe (12a) perpendiculaire au segment arqué (8a ; 8b) au niveau de la première extrémité du segment arqué (8a ; 8b) ; le segment arqué (8a ; 8b) définissant un deuxième axe (12b) perpendiculaire au segment arqué (8a ; 8b) au niveau de la deuxième extrémité du segment arqué (8a ; 8b) ;
dans laquelle le premier axe (12a) et le deuxième axe (12b) définissent un angle d'arc (13) ; et

dans laquelle l'angle d'arc (13) est d'au moins 60°.

13. La soupape (1) selon l'une des revendications 1 à 12, dans laquelle la surface externe de l'élément de soupape (4) comprend une surface d'obturateur (20) ;
dans laquelle, dans la position fermée, la surface d'obturateur (20) fait face à au moins un orifice de soupape, l'au moins un orifice étant choisi parmi le conduit d'entrée (2) ou le conduit de sortie (3) de sorte que la surface d'obturateur (20) obstrue l'écoulement de fluide dans et hors de l'au moins un orifice de soupape et
de sorte que le trajet de fluide (6a ; 6b) entre le conduit d'entrée (2) et le conduit de sortie (3) soit fermé.

14. La soupape (1) selon l'une des revendications 1 à 13, dans laquelle la partie d'écoulement de fluide (6a ; 6b) définit un trajet d'écoulement de fluide depuis le premier orifice (7a) vers le deuxième orifice (7b) ; et dans laquelle l'axe de pivotement (10) est perpendiculaire à l'ensemble du trajet d'écoulement de fluide.

FIG 1

21a

21b

FIG 2

FIG 3

FIG 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 205689801 U
- EP 2708783 A1